# EUROPEAN PATENT APPLICATION

(11) **EP 4 717 423 A1**
(43) Date of publication of application: **01.04.2026**
(21) Application number: 25203938.3
(22) Date of filing: 23.09.2025
(51) Int. Cl.: B28D 1/14, B28D 7/00, B28D 1/18, B23Q 17/09

(54) **PLATE PROCESSING METHOD AND MACHINE**

(30) Priority: 26.09.2024 IT 202400021382
(71) Applicant: C.M.S. S.p.A., 24019 Zogno (BG) (IT)
(72) Inventor: BIGOZZI, Emiliano, 61032 Fano (PU) (IT); CAPELLI, Maurizio, 24022 Alzano Lombardo (BG) (IT)
(74) Representative: Luppi Intellectual Property S.r.l.

(57) **Abstract**

A method and a vertical numerically controlled machine for processing plates are described, wherein a first machining unit (2) and a second machining unit (3) are movable in a vertical direction independently of each other and can be positioned opposite each other to perform a machining operation, in particular a drilling operation, with a horizontal machining axis on a plate interposed between the two machining units, wherein a first measuring unit (7) is carried by the first machining unit (2) so as to be movable in a vertical direction together with the first machining unit (2), the first measuring unit being configured to measure a machining tool carried by the second machining unit (3).

## Description

### Background of the invention

The invention concerns a method and a machine for processing plates, particularly for drilling a plate. The machine may comprise, in particular, a vertical numerically controlled machine with two machining units that move vertically and are positioned opposite each other to process a plate arranged vertically between the two machining units.

Specifically, but not exclusively, the invention may be applied to processing plates of glass, although it may also be used for plates of other materials, such as marble or stone materials in general, or metal, etc.

In particular, reference is made to a method and a machine for processing plates that includes a system for periodically measuring and sharpening a tool, particularly a drilling tool (or core bit) in a vertical numerically controlled drilling and milling machine.

### Prior art

It is known that drill bits used in a drilling and milling machine must undergo periodic measurement and dressing, whereby measuring the length of the worn drill bit is necessary for proper dressing.

The same applicant markets a vertical drilling and milling machine called Vertec Mill, with two vertically movable machining units arranged opposite each other, capable of drilling holes with opposing tips. The functionality of the drill bits, which are subject to wear, is periodically restored by two restoration systems, each designed to measure and dress a drill bit carried by a respective machining unit. Each restoration system includes a slide carrying a drill bit dressing stone and a slide carrying an automatic drill bit length gauge. Each slide is mounted on a portion of the machine frame and can move horizontally, independently of the other slides, controlled by its own pneumatic actuator. It moves between a retracted position, in which the device carried by the slide does not interfere with the machining process, and a forward position, in which the device carried by the slide is accessible to one of the two machining units for the respective dressing or measuring operation. Each restoring system has two slides, one for each function, since, due to space constraints, the dressing device and the measuring device of a single system cannot share the same slide.

The prior art can be improved in several respects.

First, it is desirable to be able to perform the drill bit measurement operation more simply and economically. The prior art measurement and dressing system is relatively expensive and also requires a relatively complex pneumatic actuation system due to the presence of valves, sensors, and other accessories on board the machine.

Another requirement is to improve the reliability of the measurement and dressing operations as well as the robustness of the system that performs these functions. In particular, the prior art notes that the various slides, even when retracted, are exposed to the water used during the machining phases. The same occurs for the measuring device's feeler element. Exposing slides and feelers to the machining water results in poor reliability of the drill bit recovery systems. Furthermore, in the prior art system, the measuring device's sensing element operates by sliding, parallel to the spindle axis and counteracted by a spring, which over time causes wear due to sliding friction and thus a loss of measurement accuracy.

### Summary of the invention

An object of the present invention is to overcome one or more of the aforementioned limitations and drawbacks of the prior art.

An object of the invention is to provide an alternative solution to the problem of restoring tool functionality through periodic measurement and dressing of the tool.

An object of the invention is to enable effective and precise measurement of a drilling tool in a vertical drilling and milling machine suitable for performing appropriate dressing of the tool.

An advantage is to provide a drill bit measurement system that is simple, robust, and economical in construction and can be used to appropriately dress the drill bits.

An advantage is to provide a method and machine that can perform the measurement and dressing of tools, particularly drilling tools, with particularly precise and reliable results.

An advantage is to allow periodic measurement and dressing of tools with considerable consistency of performance over time.

An advantage is to provide a numerically controlled machine equipped with means for automatically measuring tools (suitable for appropriately dressing the tools) and characterized by considerable ease of maintenance.

These purposes and advantages, and others, are achieved by a method and machine according to one or more of the claims listed below.

In one example, a vertical numerically controlled machine comprises two machining units (or heads, or groups) that are movable at least in the vertical direction independently of each other and that are positionable in a machining position in which the machining units are arranged opposite each other to perform machining with a horizontal machining axis on a plate interposed between the machining units, wherein the vertical machine comprises a first measuring unit that is carried by the first machining unit so as to be movable at least in the vertical direction together with the first machining unit and that is configured to measure a machining tool carried by the second machining unit.

In particular, the first machining unit may assume at least one relative position, with respect to the second machining unit, that is different from the aforementioned machining position, that is, at least one relative position in which the spindle axes of the two machining units do not face each other coaxially but are arranged at two different vertical heights, wherein said at least one relative position may be a measuring position in which a machining tool carried by the second machining unit can interact operationally with a measuring group carried by the first machining unit.

The first machining unit constitutes an aggregate applicable, in particular, to a numerically controlled vertical drilling and milling machine used for processing glass or other materials (stone or metal).

The first machining unit may be applied to an existing machine (for example, a vertical drilling and milling machine).

The proposed solution allows for simpler, more robust, and more cost-effective drilling measurement than the prior art, thanks to the fact that the two machining units are equipped with two vertical axes controlled by two independent motors and can therefore be positioned at different heights relative to each other.

The machine in question may be, in particular, a vertical numerically controlled machine, such as a drilling-milling machine, with two machining units configured to perform drilling with opposing tips.

The machine in question may be, in particular, a drilling-milling machine in which each machining unit includes a spindle configured to drive a tool with a (horizontal) machining axis. The machining unit also includes, for each machining unit, a slide or cursor movable along a movement axis parallel to the spindle's machining axis. The slide carries a pressure element that operates essentially coaxially with the spindle's machining axis and is used during drilling operations to press the plate with a certain force to stabilize it during processing. This cursor or slide is highly reliable in operation, as it must be maintained in full efficiency, as the pressure function is essential to the machine's operation. Furthermore, this cursor or slide may also be used, optionally, as a manipulator for large scraps, making it particularly robust in construction.

The measuring unit may also integrate the tool dressing function, thus creating a measuring and dressing unit. In this case, the measuring unit includes a tool dressing device.

The measuring unit may be mounted, as an aggregate applied to the machine (in particular also including the dressing function), on the aforementioned cursor or slide. Specifically, the measuring (and dressing) unit may be applied directly to the pressure element, which, as mentioned, is made of a particularly robust construction, using a support (e.g., aluminum) placed directly on the pressure element, perhaps by simply modifying the machined structure of the pressure element already present on the machine. The measuring unit may be fixed to this support (made of aluminum), which includes a flexible sensing element (contact plate) arranged for contact with the tool. A dressing stone may also be fixed to this support.

The measuring unit includes at least one sensor (e.g., an inductive position sensor) configured to measure the length of the tool (drill bit). The sensor may be operationally associated with an elastic element (e.g., in the form of a sheet) rigidly connected to the sensing element. Contact between the tool and the sensing element may occur frontally, that is, along a reciprocal approach axis parallel to the axis of movement of the slide or cursor. The sensing element may include, in particular, a contact plate arranged orthogonally to the axis of the slide.

The flexible sensing element may be supported directly by the elastic element. This construction of the measuring assembly prevents sliding movements between bodies in relative motion. Such sliding movements, due to sliding friction and the resulting wear, could cause a variation in the thrust required to activate the sensor over time, thus distorting the measurement due to the different elastic yields. Measurements performed without sliding movements are therefore particularly precise and reliable.

The elastic element (e.g., a stainless-steel leaf spring) maintains the same stiffness over time even when exposed to a highly hostile environment, as is typically the case with drilling and milling machines.

The sensor may be a non-contact sensor, such as an inductive type, which can be hermetically sealed to ensure water tightness.

### Brief description of the drawings

The invention may be better understood and implemented with reference to the attached drawings, which illustrate non-limiting examples of its implementation, in which:
- Figure 1 is a partial perspective view of a first example of a vertical machine constructed in accordance with the present invention;

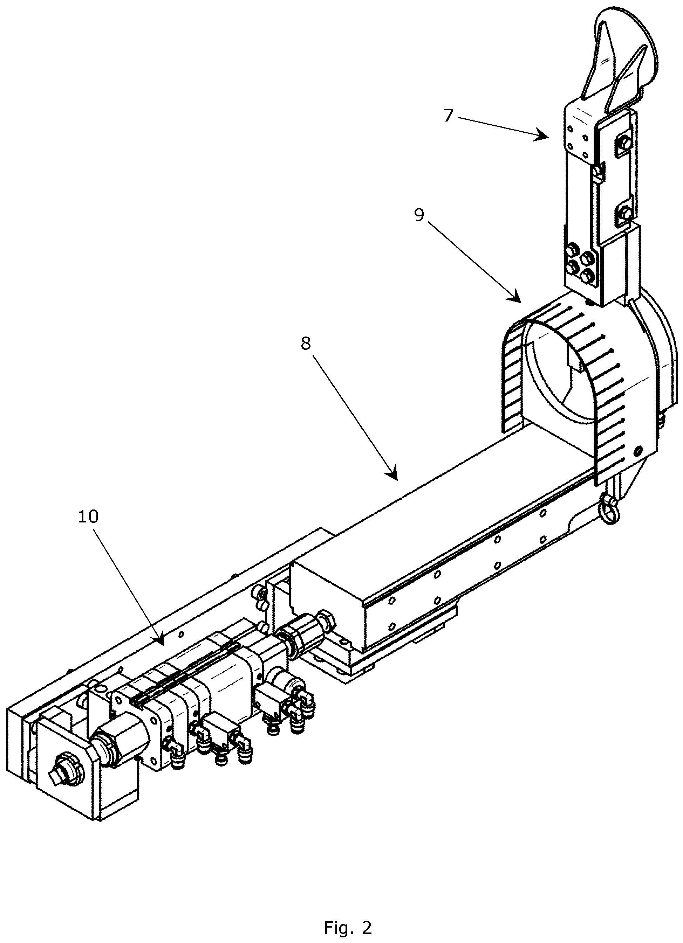

- Figure 2 is a perspective view of a portion of the machine of Figure 1, including a slide or cursor and a measuring and dressing unit arranged on the slide or cursor;

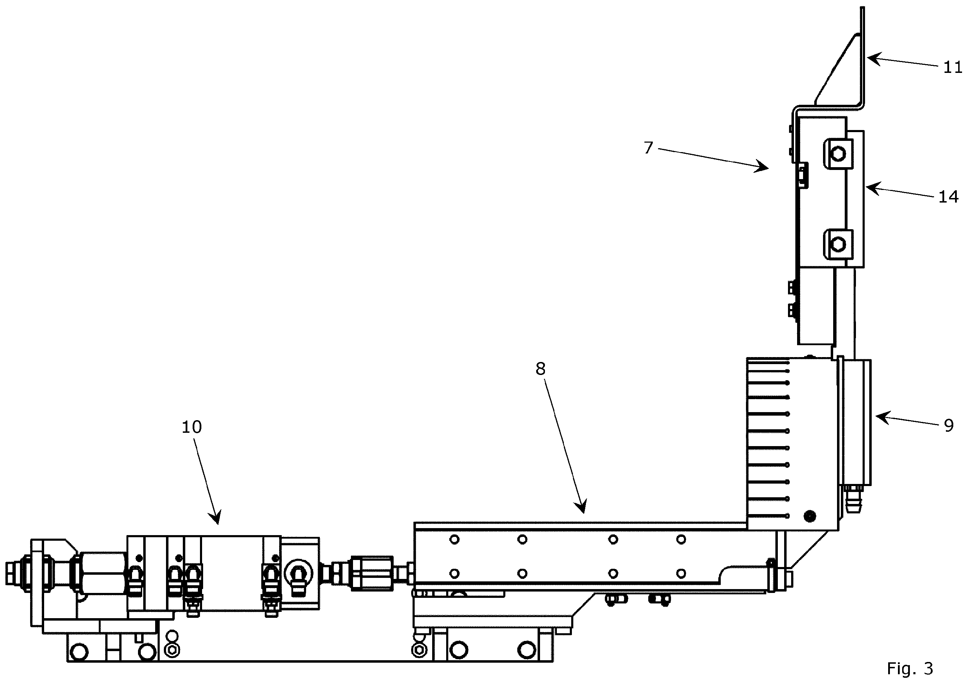

- Figure 3 is a side view, in vertical elevation, of the portion of the machine illustrated in Figure 2;

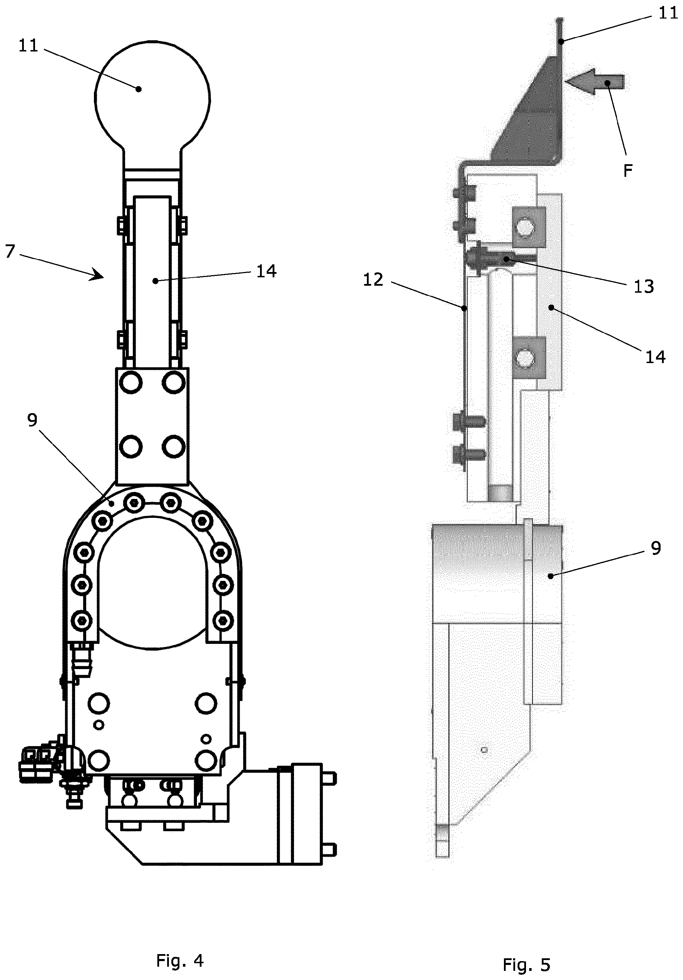

- Figure 4 is a side view from the right of Figure 3;
- Figure 5 shows an enlarged detail of Figure 3, in which an arrow indicating a contact force on the feeler element is visible;
- Figure 6 is a perspective view of two machining units of a second example of a vertical machine constructed in accordance with the present invention, with the two machining units arranged coaxially, one facing the other;
- Figure 7 is a side view, in vertical elevation, of the two machining units of Figure 6;
- Figure 8 is a side view, in vertical elevation, of the two machining units shown in Figure 6 during a measurement phase of a drill bit;
- Figure 9 is a side view, in vertical elevation, of the two machining units shown in Figure 6 during a dressing phase of a drill bit.

### Detailed description

With reference to the above figures, it should be noted that, for greater simplicity and clarity of exposition, similar elements of different embodiments have been indicated with the same numbering. 1 has been indicated overall as a machine for processing plates, in particular for processing plates of glass. Machine 1 may comprise, in particular, a vertical numerically controlled machine. The machine 1 may comprise, in particular, a drilling and milling machine.

The machine 1 may comprise, in particular, a controlled horizontal X-axis, for example, to move a plate of glass being processed in a horizontal feed direction, a controlled vertical Y-axis, for example, to move the machining units in a vertical processing direction, and a controlled horizontal Z-axis orthogonal to the vertical XY plane.

The machine 1 comprises a first machining unit 2 and a second machining unit 3. Each machining unit 2 and 3 is movable in at least one vertical direction (along the Y-axis) independently of the other machining unit. The first machining unit 2 is equipped with a first motor drive to operate its vertical movement along the Y-axis. The second machining unit 3 is equipped with a second motor drive to operate its vertical movement along the Y-axis. The first machining unit 2 is movable vertically (Y-axis) along a first linear guide 4. The second machining unit 3 is movable vertically (Y-axis) along a second linear guide 5.

Each machining unit 2 and 3 is equipped with a respective spindle configured to operate at least one tool 6, in particular to operate a drilling tool (core bit) with a rotation around a horizontal machining axis.

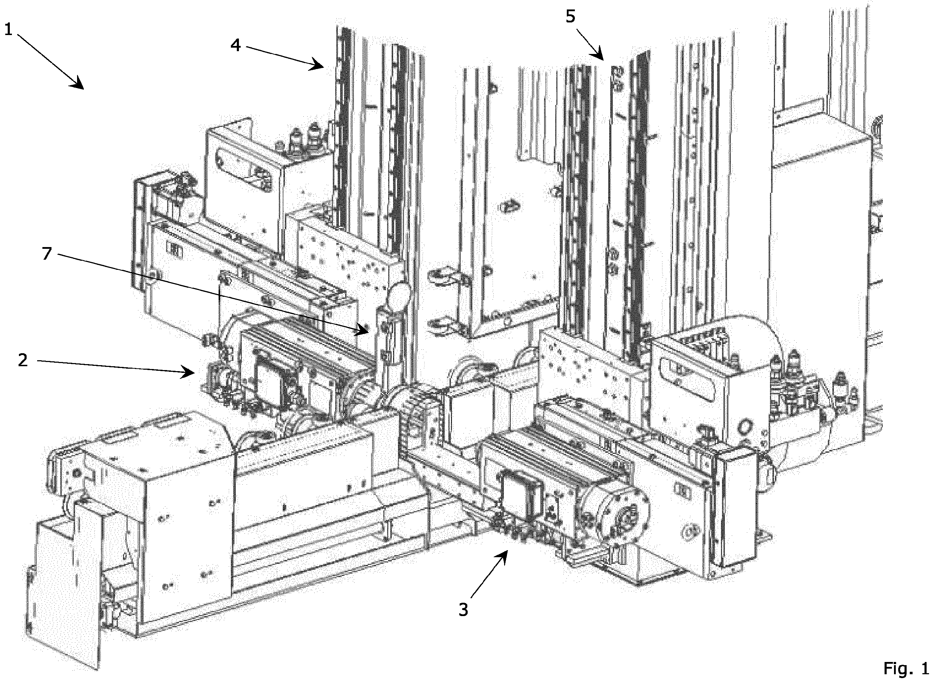

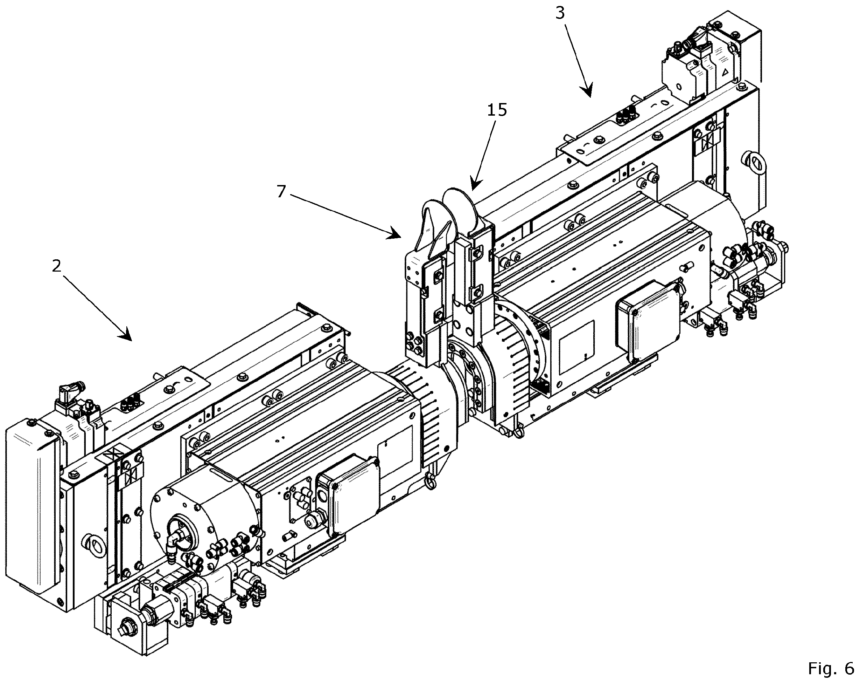

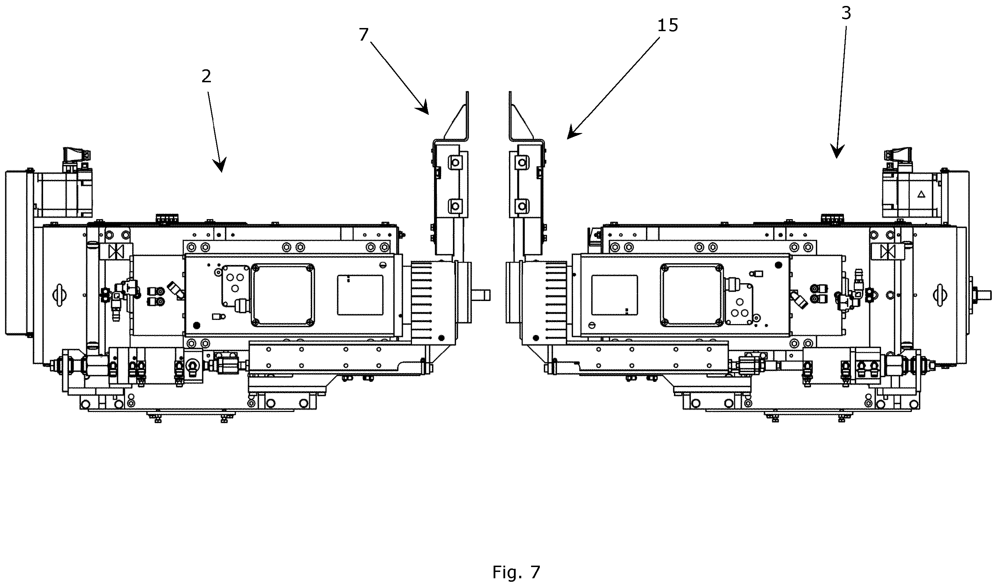

The two machining units 2 and 3 may be positioned in at least one machining position (see Figures 1, 6, and 7) in which the machining units 2 and 3 are arranged coaxially opposite each other and are configured to perform a machining operation (in particular, drilling a plate) with a horizontal machining axis on a plate placed between the two machining units. The two machining units 2 and 3 are independently movable along the vertical direction of the Y axis, so they can be positioned by the numerical control at different vertical heights from each other.

Machine 1 comprises a first measuring unit 7 carried by the first machining unit 2 so that it can be moved at least vertically (along with the Y-axis) together with the first machining unit 2. The first measuring unit 7 is configured to measure at least one tool 6 carried by the second machining unit 3.

The first measuring unit 7 may also integrate, in particular, the tool dressing function, as in these examples, and therefore may also be referred to as the first measuring and dressing unit in the following.

The first machining unit 2 may comprise, in particular, a first slide 8 movable in a pressure direction parallel to the machining axis. In the illustrated examples, the pressure direction and the machining axis are horizontal.

The first machining unit 2 may include, in particular, a first presser 9 arranged on the first slide 8 to exert pressure against the plate during processing (in particular, during drilling). In these specific examples, the first measuring unit 7 is supported by the first slide 8. In particular, the first measuring unit 7 is mounted on the first presser 9.

The first measuring unit 7 may, in particular, be arranged above the first presser 9.

The first slide 8 may, in particular, slide on linear guides under the control of a first linear actuator 10. The first linear actuator 10 may comprise, in particular, a fluid-operated actuator (e.g., pneumatic), an electric actuator, or another type of actuator.

The first measuring unit 7 may comprise, in particular, a first measuring device for performing a measurement of a tool, in particular a measurement of the length of a tool.

The first measuring device may comprise, in particular, a first feeler element 11 arranged for contact with a tool 6. The first measuring device may comprise, in particular, a first elastic element 12 rigidly connected to the first feeler element 11. The first measuring device may comprise, in particular, a first position sensor 13 operatively associated with the first elastic element 12, i.e. configured to detect a position of the first elastic element 12. The first position sensor 13 may comprise, in particular, an inductive type of position sensor.

The first measuring and dressing unit 7 may comprise, in particular, a first dressing plate 14 arranged beneath the first feeler element 11. The first dressing plate 14 is configured to dress a tool 6 carried by the second machining unit 3.

The first dressing plate 14 may, in particular, be arranged vertically. The first feeler element 11 may comprise, in particular, a vertically arranged contact plate. The first elastic element 12 may comprise, in particular, at least one elastically movable portion arranged behind the first dressing plate 14. The first position sensor 13 may be arranged, in particular, so as to detect a position of the aforementioned elastically movable portion of the first elastic element 12.

The first elastic element 12 may comprise, in particular, a laminar body with a first end fixed to a frame of the first dressing and measuring unit 7 and a second end, opposite the first end, fixed so as to be integral with the contact plate of the first feeler element 11. The first end of the laminar body may be arranged below the second end of the laminar body.

In the illustrated examples, the first feeler element 11 comprises a square-shaped piece, which includes the contact plate, provided with a flanged part which is firmly coupled (e.g. with screw connections) to the second (upper) end of the laminar body which forms the first elastic element 12.

The first elastic element 12 may, in particular, be capable of assuming a rest position, in which the tool 6 is not in contact with the first feeler element 11 and the first elastic element 12 (not stressed) is close to the first position sensor 13, and at least one measurement position, in which the tool 6 whose length is to be measured is placed in contact with the first feeler element 11 and the first elastic element 12 (stressed by a force F) is spaced from the first position sensor 13 which is able to detect the displacement of the first elastic element 12 due to the contact between the tool 6 and the first feeler element 11. The detection of this displacement allows the length of the tool 6 to be precisely determined and therefore allows an effective restoration of the functionality of the tool itself.

The machine 1 may comprise, in particular, a second measuring unit 15 carried by the second machining unit 3 so as to be movable at least in the vertical direction (along the Y-axis of the numerical control) together with the second machining unit 3. The second measuring unit 15 may be, in particular, substantially symmetrical with respect to the first measuring unit 7 with reference to a (vertical) symmetry plane orthogonal to the (horizontal) machining axis of the two machining units 2 and 3.

The second measuring unit 15 is configured so as to operate on at least one tool carried by the first machining unit 2.

The second measuring unit 15 may comprise a second measuring device for performing a measurement of a tool.

The second measuring device may be, in particular, identical to the first measuring device, so that the similar elements of the two measuring devices have been indicated with the same numbering.

The second measuring device may comprise, in particular, a second feeler element 11 arranged for contact with a tool. The second measuring device may comprise a second elastic element 12 rigidly connected to the second feeler element 11. The second measuring device may comprise a second position sensor 13, in particular of the inductive type, operatively associated with the second elastic element 12.

The second measuring unit 15 may include, in particular, a second dressing plate 14 arranged below the second feeler element 11 to dress a tool. In practice, the second measuring unit 15 may also integrate the dressing function and may therefore be referred to hereinafter as the second measuring and dressing unit 15.

The second dressing plate 14 may be arranged vertically. The second feeler element 11 may include, in particular, a vertically arranged contact plate. The second elastic element 12 may comprise, in particular, at least one elastically movable portion arranged behind the second dressing plate 14. The second elastic element 12 may comprise, in particular, a laminar body with a first end fixed to a frame of the second dressing and measuring unit 15 and a second end, opposite to the first end, fixed to the contact plate of the second feeler element 11. The second elastic element 12 may be, in particular, capable of assuming a rest position, in which the tool is not in contact with the second feeler element 11 and the second elastic element 12 is close to the second position sensor 13, and at least one measuring position, in which the tool is in contact with the second feeler element 11 and the second elastic element 12 is spaced from the second position sensor 13.

The second machining unit 3 may comprise, in particular, the same elements as the first machining unit 2, for which the similar elements of the two machining units 2 and 3 have been indicated with the same numbering.

The second machining unit 3 may include a second slide 8 movable in a pressure direction parallel to the machining axis and a second presser 9 arranged on the second slide 8 to exert pressure against the plate during machining. The second dressing and measuring unit 15 may be supported by the second slide 8. The second dressing and measuring unit 15 may, in particular, be arranged above the second presser 9.

The second slide 8 may, in particular, slide on linear guides under the control of a second linear actuator 10.

The operation of the vertical numerically controlled machine 1 implements a method for processing a tool 6 applicable to the machine itself, in particular for restoring the functionality of a worn tool.

The method comprises the step of measuring (a length of) a tool (in particular, a drill) carried by the first machining unit 2 using the measuring unit carried by the second machining unit 3. The method may also comprise the step of dressing the tool carried by the first machining unit 2 using a dressing group carried by the second machining unit 3, in particular using the same measuring unit which also integrates the dressing function.

The method may comprise, in particular, the step of measuring a tool (in particular, a drill bit) carried by the second machining unit 3 by means of the dressing and measuring unit carried by the first machining unit 2. The method may also comprise the step of dressing the tool carried by the second machining unit 2 by means of a dressing group carried by the first machining unit 3, in particular by means of the same measuring unit which also integrates the dressing function.

Each measuring and dressing unit 7 and 15 may be moved by a slide 8 of the respective machining unit 2 and 3, so as to allow movement of the measuring and dressing unit from a rearward rest position, in which the measuring and dressing unit does not interfere with the machining operations performed by the machining units, to a forward operating position, in which the tool carried by the opposing machining unit can interact in contact with the dressing device and with the measuring device of the measuring and dressing unit.

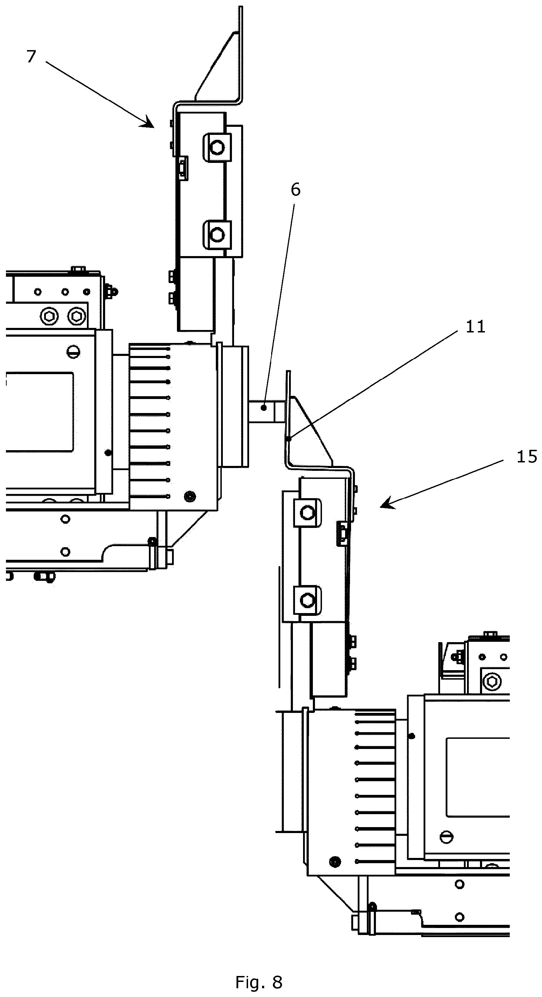

Figure 8 shows a phase of measuring the length of the drill bit carried by one machining unit (on the left in Figure 8), in which the drill bit interacts with a sensing element carried by the other machining unit (on the right in Figure 8).

During the measurement, the elastic sheet moves away from the position sensor, and the sensor's measurement of the elastic sheet's position will determine the length of the drill bit. Also in this phase, the two machining units are positioned at two different vertical heights to allow for measurement of the drill bit.

A measurement phase (not illustrated) with inverted positions is possible if the drill bit to be measured is carried by the right-hand machining unit. In this case, the measuring device of the dressing unit and the measurement device carried by the left-hand machining unit will be used.

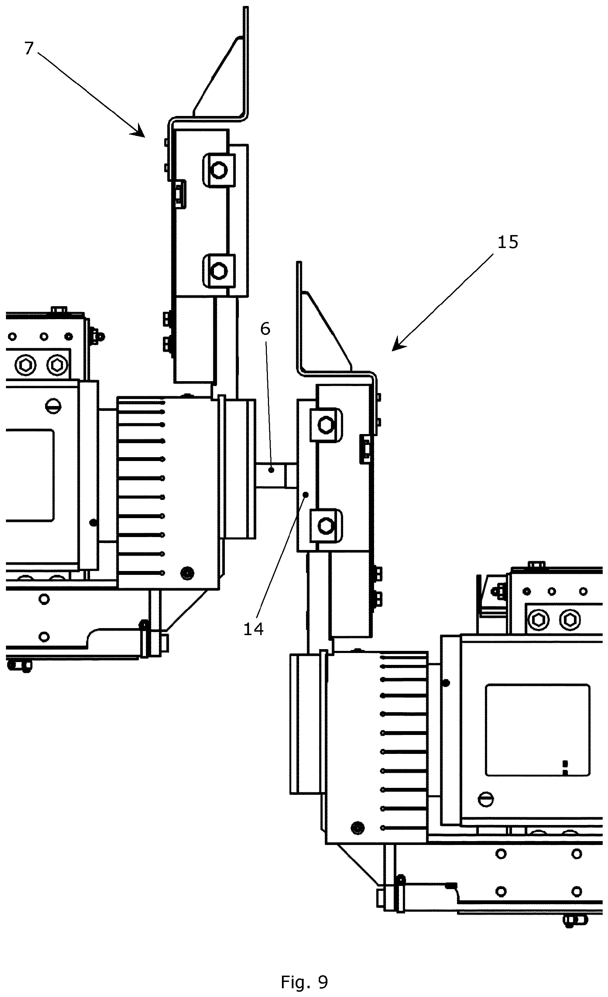

Figure 9 shows a dressing phase in which a drill bit carried by one machining unit (on the left in Figure 9) interacts with a dressing plate carried by the other machining unit (on the right in Figure 9). Note that the two machining units are positioned at two different vertical heights to allow for the dressing process.

It is possible to provide a dressing phase (not illustrated) with inverted positions, in the case where the drill bit to be dressed is carried by the right-hand machining unit, in which case the dressing device of the dressing and measuring unit carried by the left-hand machining unit will be used.

## Claims

1. Vertical numerically controlled machine, comprising a first machining unit (2) and a second machining unit (3), each of said machining units (2; 3) being movable in at least one vertical direction independently of the other machining unit, said machining units (2; 3) being positionable in at least one machining position in which said machining units (2; 3) are arranged coaxially opposite each other and are configured to perform a machining operation with a horizontal machining axis on a plate interposed between said two machining units (2; 3); said machine comprising a first measuring unit (7) carried by said first machining unit (2) so as to be movable at least in said vertical direction together with said first machining unit (2), said first measuring unit (7) being configured so as to operate on at least one tool (6) carried by said second machining unit (3).

2. Machine according to claim 1, wherein said first machining unit (2) comprises a first slide (8) movable in a pressure direction parallel to said machining axis and a first presser (9) arranged on said first slide (8) to exert pressure against the plate during machining, said first measuring unit (7) being supported by said first slide (8).

3. Machine according to claim 2, wherein said first measuring unit (7) is arranged above said first presser (9).

4. Machine according to claim 2 or 3, wherein said first slide (8) is slidable on linear guides under the control of a first linear actuator (10).

5. Machine according to any one of the preceding claims, wherein said first measuring unit (7) for performing a measurement of a tool comprises a first feeler element (11) arranged for contact with a tool, a first elastic element (12) rigidly connected to said first feeler element (11) and a first position sensor (13), in particular of the inductive type, operatively associated with said first elastic element (12).

6. Machine according to claim 5, wherein said first measuring unit (7) is associated with a first dressing plate (14) arranged below said first feeler element (11) to perform a dressing of a tool.

7. Machine according to claim 6, wherein said first dressing plate (14) is arranged vertically, wherein said first feeler element (11) comprises a vertically arranged contact plate and wherein said first elastic element (12) comprises at least one elastically movable portion arranged behind said first dressing plate (14).

8. Machine according to any one of claims 5 to 7, wherein said first elastic element (12) comprises a laminar body with a first end fixed to a frame of said first measuring unit (7) and a second end, opposite to said first end, fixed to said contact plate.

9. Machine according to any one of claims 5 to 8, wherein said first elastic element (12) is able to assume a rest position, in which the tool is not in contact with said first feeler element (11) and said first elastic element (12) is close to said first position sensor (13), and at least one measuring position, in which the tool is in contact with said first feeler element (11) whereby said first elastic element (12) is spaced from said first position sensor (13).

10. Machine according to any one of the preceding claims, comprising a second measuring unit (15) carried by said second machining unit (3) so as to be movable at least in said vertical direction together with said second machining unit (3), said second measuring unit (15) being configured so as to operate to measure at least one tool carried by said first machining unit (2).

11. Machine according to claim 10, wherein said second measuring unit (15) comprises a second feeler element (11) arranged for contact with a tool, a second elastic element (12) rigidly connected to said second feeler element (11) and a second position sensor (13), in particular of the inductive type, operatively associated with said second elastic element (12); said second measuring unit (15) being associated, in particular, with a second dressing plate (14) arranged below said second feeler element (11) to perform a dressing of a tool; said second dressing plate (14) being, in particular, arranged vertically; said second elastic element (12) comprising, in particular, at least one elastically movable portion arranged behind said second dressing plate (14); said second elastic element (12) comprising, in particular, a laminar body with a first end fixed to a frame of said second measuring unit (15) and a second end, opposite to said first end, fixed to said second feeler element (11); said second elastic element (12) being, in particular, able to assume a rest position, in which the tool is not in contact with said second feeler element (11) and said second elastic element is close to said second position sensor (13), and at least one measuring position, in which the tool is in contact with said second feeler element (11) whereby said second elastic element (12) is spaced from said second position sensor (13).

12. Machine according to claim 10 or 11, wherein said second machining unit (3) comprises a second slide (8) movable in a pressure direction that is parallel to said machining axis and a second presser (9) arranged on said second slide (8) to exert pressure against the sheet during machining, said second measuring unit (15) being supported by said second slide (8); said second measuring unit (15) being, in particular, arranged above said second presser (9).

13. Method for processing a tool of a vertical numerically controlled machine, in particular a machine according to any one of the preceding claims, wherein said vertical machine comprises a first machining unit (2) and a second machining unit (3), said machining units (2; 3) being movable at least in one vertical direction independently of each other, said machining units (2; 3) being positionable in at least one machining position in which said machining units (2; 3) are arranged coaxially opposite each other and can perform a machining with a horizontal machining axis on a plate interposed between said two machining units (2; 3), said method comprising the steps of measuring a tool carried by said first machining unit (2) by means of a measuring unit carried by said second machining unit (3).

14. Method according to claim 13, wherein said second machining unit (3) comprises a slide (8) which is movable in a pressure direction parallel to said machining axis and which carries a presser (9) arranged to exert pressure against the sheet during machining, said measuring unit being carried by said slide (8).

15. Method according to claim 13 or 14, comprising the steps of measuring a tool carried by said second machining unit (3) by means of a measuring unit carried by said first machining unit (2).
